# EUROPEAN PATENT APPLICATION

(11) **EP 3 421 113 A1**
(43) Date of publication of application: **02.01.2019**
(21) Application number: 17744093.0
(22) Date of filing: 20.01.2017
(51) Int. Cl.: B01D 53/14, B01D 53/18, B01D 53/62, B01D 53/78, C01B 32/50

(54) **CO2 RECOVERY DEVICE AND CO2 RECOVERY METHOD**

(30) Priority: 25.01.2016 JP 2016011600
(71) Applicant: Mitsubishi Heavy Industries Engineering, Ltd., Nishi-ku, Yokohama-shi, Kanagawa 2208401 (JP)
(72) Inventor: TSUJIUCHI, Tatsuya, Tokyo 108-8215 (JP); KAMIJO, Takashi, Tokyo 108-8215 (JP); YONEKAWA, Takahito, Tokyo 108-8215 (JP); MIYAMOTO, Osamu, Hiroshima-shi Hiroshima 733-0036 (JP)
(74) Representative: Studio Torta S.p.A.
(86) International application number: PCT/JP2017/001959
(87) International publication number: WO 2017/130863

(57) **Abstract**

The present invention includes: a CO₂ absorption part 141 including a first absorption section 141A for absorbing CO₂ from exhaust gas and a second absorption section 141B that is located below the first absorption section 141A, arranged vertically within a CO₂ absorption tower 14 for absorbing CO₂ from exhaust gas 11B containing CO₂; and a first absorption liquid extraction line L₁₁ that is provided between the first absorption section 141A and the second absorption section 141B, and that is for extracting, from the absorption tower 14, a CO₂ absorption liquid that has absorbed CO₂ in the exhaust gas at the first absorption section 141A, and for resupplying the CO₂ absorption liquid after being cooled to the second absorption section 141B within the absorption tower 14, wherein an extraction position X of the first absorption liquid extraction line L₁₁ for extracting the CO₂ absorption liquid from the absorption tower 14 has both a peak liquid temperature in a reaction temperature distribution for the CO₂ absorption liquid inside the first absorption section 141A, and a peak liquid temperature in a reaction temperature distribution for the CO₂ absorption liquid inside the second absorption section 141B.

## Description

### Technical Field

The present invention relates to a CO₂ recovery device and a CO₂ recovery method.

### Background Art

As one of the causes of a global warming phenomenon of the earth, a greenhouse effect by CO₂ is pointed out, and countermeasures have become urgent internationally to protect the global environment. As a source of CO₂, there is a tendency towards every human activity field that combusts fossil fuels and a demand for suppression of emission thereof tends to further strengthen. According to this, with the aim of power generation facilities such as thermal power plants that use a large amount of fossil fuel, for example, a CO₂ recovery device has been developed in which an exhaust gas from a boiler or the like come into contact with a CO₂ absorption liquid such as an amine compound to remove and recover CO₂ contained in the exhaust gas.

In a case where CO₂ is recovered from the exhaust gas using the absorption liquid, there is a problem that the amine compound is accompanied by a decarbonated exhaust gas recovering CO₂ and is discharged from a CO₂ absorption column to the outside. In order to prevent occurrence of air pollution caused by this amine compound, it is necessary to reduce a discharge amount of the amine compound discharged along with decarbonated exhaust gas.

In the related art, PTL 1 discloses the following recovery processing. That is, a plurality of washing section steps are provided, which recover an amine compound companied by a decarbonated exhaust gas by performing a gas-liquid contact using rinse water on the decarbonated exhaust gas of which CO₂ is absorbed and removed by a gas-liquid contact between a CO₂ absorption liquid and CO₂, and the amine compound accompanied by the decarbonated exhaust gas is sequentially recovered in the plurality of the washing section steps.

### Citation List

### Patent Literature

[PTL 1] Japanese Unexamined Patent Application Publication No. 2002-126439

### Summary of Invention

### Technical Problem

However, in recent years, from the viewpoint of environmental conservation, it is desired to further reduce concentrations of the amine compound which is an absorption liquid component which remains in the decarbonated exhaust gas and is discharged. Particularly, in a case where a CO₂ recovery device is installed in order to recover an exhaust gas in large thermal power plants with a large flow rate of processing gas, a discharge amount of the exhaust gas is large, and thus, a discharge amount of the absorption liquid component which remains in the decarbonated exhaust gas and is discharged tends to increase, and it is necessary to further reduce the concentrations of the amine compound that is accompanied by the exhaust gas from a CO₂ absorption column and is discharged.

In addition, a reaction in which the CO₂ absorption liquid absorbs CO₂ contained in the exhaust gas is an exothermic reaction, and thus, a temperature of the CO₂ absorption liquid increases in the CO₂ absorption column, and some amine compounds in the CO₂ absorption liquid react with oxygen contained in the exhaust gas and oxidative deterioration occurs, and as a result, there is a problem that a loss of CO₂ absorption liquid occurs.

The present invention is made in consideration of the above-described problems, and an object thereof is to provide a CO₂ recovery device and a CO₂ recovery method capable of suppressing oxidative deterioration of a CO₂ absorption liquid.

### Solution to Problem

In order to achieve the above-described object, according to the first invention of the present invention, there is provided a CO₂ recovery device having an absorption column which causes a gas containing CO₂ and a CO₂ absorption liquid to come into countercurrent contact with each other to absorb CO₂ from the gas, the device including: a CO₂ absorption section which includes a first absorption section absorbing CO₂ from the gas and a second absorption section positioned below the first absorption section, the first absorption section and the second absorption section being disposed in the absorption column in a height direction of the absorption column; and a first absorption liquid extraction line which is provided between the first absorption section and the second absorption section, and through which a CO₂ absorption liquid absorbing CO₂ contained in the gas in the first absorption section is extracted from the absorption column and the CO₂ absorption liquid is cooled and resupplied to the second absorption section in the absorption column, in which an extraction position of the first absorption liquid extraction line through which the CO₂ absorption liquid is extracted from the absorption column is a position having a peak liquid temperature in a reaction temperature distribution of the CO₂ absorption liquid inside the first absorption section and a peak liquid temperature in a reaction temperature distribution of the CO₂ absorption liquid inside the second absorption section.

According to a second invention, in the first invention, a cooler which cools the CO₂ absorption liquid extracted from the first absorption liquid extraction line is provided, and a temperature difference between a liquid temperature when the CO₂ absorption liquid is extracted and a liquid temperature when the CO₂ absorption liquid cooled by the cooler is resupplied is 10°C or more.

According to a third invention, in the first invention, a liquid temperature when the CO₂ absorption liquid is extracted at the extraction position is 45°C or more.

According to a fourth invention, in the second invention, the CO₂ recovery device further includes a cooling column which cools the gas containing CO₂ and supplies the cooled gas to the absorption column, in which a liquid temperature when the CO₂ absorption liquid cooled by the cooler in the first absorption liquid extraction line is resupplied is equal to or less than a gas temperature of the gas supplied from the cooling column to the absorption column.

In a fifth invention, in the first invention, the CO₂ recovery device further includes a third absorption section which is disposed below the second absorption section in the height direction of the absorption column along with the first absorption section and the second absorption section and absorbs CO₂ from the gas, and a second absorption liquid extraction line which is provided between the second absorption section and the third absorption section, and through which the CO₂ absorption liquid absorbing CO₂ contained in the gas in the second absorption section is extracted from the absorption column and the CO₂ absorption liquid is cooled and resupplied to the third absorption section in the absorption column.

According to a sixth invention, there is provided a CO₂ recovery device having an absorption column which causes a gas containing CO₂ and a CO₂ absorption liquid to come into countercurrent contact with each other to absorb CO₂ from the gas, the device including: a CO₂ absorption section which includes a first absorption section having a filling layer absorbing CO₂ from the gas and a second absorption section which is positioned below the first absorption section and has a filling layer absorbing CO₂ from the gas, the first absorption section and the second absorption section being disposed in the absorption column in a height direction of the absorption column; and a first absorption liquid extraction line which is provided between the first absorption section and the second absorption section, and through which a CO₂ absorption liquid absorbing CO₂ contained in the gas in the first absorption section is extracted from the absorption column and the CO₂ absorption liquid is cooled and resupplied to the second absorption section in the absorption column, in which in a case where the sum of heights of the filling layers in the CO₂ absorption section is set to 1, an extraction position of the first absorption liquid extraction line through which the CO₂ absorption liquid is extracted from the absorption column is an extraction height of 0.25 to 0.85 from a lower end of the filling layer of the second absorption section.

According to a seventh invention, in the sixth invention, the extraction position is an extraction height of 0.25 to 0.7 from the lower end of the filling layer of the second absorption section.

According to an eighth invention, in the sixth invention, the extraction position is an extraction height of 0.4 to 0.7 from the lower end of the filling layer of the second absorption section.

In a ninth invention, in the sixth invention, the liquid temperature when the CO₂ absorption liquid is extracted at the extraction position is 45°C or more.

According to a tenth invention, in the sixth invention, the CO₂ recovery device further includes a third absorption section which is disposed below the second absorption section in the height direction of the absorption column along with the first absorption section and the second absorption section and absorbs CO₂ from the gas; and a second absorption liquid extraction line which is provided between the second absorption section and the third absorption section, and through which the CO₂ absorption liquid absorbing CO₂ contained in the gas in the second absorption section is extracted from the absorption column and the CO₂ absorption liquid is cooled and resupplied to the third absorption section in the absorption column, in which in a case where the sum of heights of the filling layers in the CO₂ absorption section is set to 1, an extraction height of 0.25 to 0.85 from a lower end of the filling layer of the third absorption section is set.

According to an eleventh invention, there is provided a CO₂ recovery method having an absorption column which causes a gas containing CO₂ and a CO₂ absorption liquid to come into countercurrent contact with each other to absorb CO₂ from the gas, the method including: a first absorption step of causing the gas and the CO₂ absorption liquid to come into countercurrent contact with each other by a filling layer of a first absorption section in the absorption column to absorb CO₂ from the gas; an extraction/resupply step of extracting the CO₂ absorption liquid absorbing CO₂ contained in the gas in the first absorption section from the absorption column and cooling the CO₂ absorption liquid by a cooler to resupply into the absorption column; and a second absorption step of causing the gas and the resupplied CO₂ absorption liquid to come into countercurrent contact with each other by a filling layer of a second absorption section which is disposed in the absorption column in a height direction of the absorption column and is positioned below the first absorption section to absorb CO₂ from the gas, in which in the extraction/resupply step, in a case where the sum of heights of the filling layers in the CO₂ absorption section is set to 1, an extraction position at which the CO₂ absorption liquid is extracted from the absorption column is an extraction height of 0.25 to 0.85 from a lower end of the filling layer of the second absorption section.

### Advantageous Effects of Invention

According to the present invention, it is possible to suppress oxidative deterioration of a CO₂ absorption liquid and to suppress a loss of the CO₂ absorption liquid without largely increasing a reaction liquid temperature of the CO₂ absorption liquid in the CO₂ absorption column. Accordingly, it is possible to decrease components which have oxidatively deteriorated from being discharged to the outside.

### Brief Description of Drawings

Fig. 1 is a schematic diagram of a CO₂ recovery device according to a first embodiment.
Fig. 2 is a graph showing a relationship between a liquid temperature of a CO₂ absorption liquid inside a CO₂ absorption section and an extraction height ratio of the CO₂ absorption column.
Fig. 3 is a graph showing a relationship between a gas temperature of an exhaust gas introduced into the CO₂ absorption column and an extraction height of the CO₂ absorption section.
Fig. 4 is a graph obtained by comparing the liquid temperature and the gas temperature with each other in a case where a third extraction position of an "extraction height ratio 0.63" is set as an extraction position.
Fig. 5 is a graph showing a relationship among the extraction height ratio (horizontal axis), a rich liquid CO₂ loading ratio (left vertical axis), and an oxidative deterioration loss ratio (right vertical axis).
Fig. 6 is a schematic diagram of a CO₂ recovery device according to a third embodiment.
Fig. 7 is a graph showing a relationship between a liquid temperature of a CO₂ absorption liquid and an extraction height ratio of a CO₂ absorption section.
Fig. 8 is a graph showing a relationship between a gas temperature of an exhaust gas introduced into the CO₂ absorption column and an extraction height ratio of the CO₂ absorption section.

### Description of Embodiments

Hereinafter, preferred embodiments of the present invention will be described in detail with reference to the accompanying drawings. In addition, the present invention is not limited to the embodiments, and various modifications, additions, and omissions can be applied by a person skilled in the art without departing from ideas and scopes described in claims.

### First Embodiment

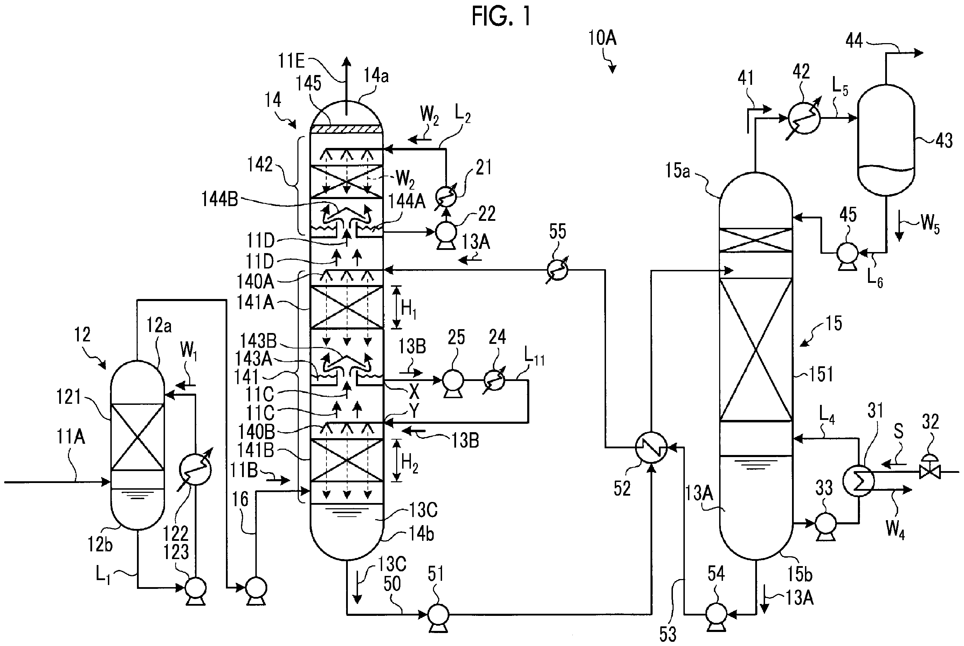

Fig. 1 is a schematic diagram of a CO₂ recovery device according to a first embodiment. As shown in Fig. 1, for example, a CO₂ recovery device 10A is a device which recovers CO₂ contained in a boiler exhaust gas (hereinafter, referred to as an "exhaust gas") 11A containing CO₂ from a boiler (not shown) or the like. For example, the CO₂ recovery device 10A includes a cooling column 12 which cools the exhaust gas 11A discharged from the boiler or the like, a CO₂ absorption column 14 which is provided on a rear stage of the cooling column 12 and causes a cooled exhaust gas 11B and a lean solution 13A of a CO₂ absorption liquid to come into countercurrent contact with each other such that CO₂ contained in the exhaust gas 11A is absorbed by the CO₂ absorption liquid to be removed, and an absorption liquid regeneration column 15 which is provided on a rear stage of the CO₂ absorption column 14 and discharges CO₂ from a rich solution 13C of the CO₂ absorption liquid absorbing CO₂ to regenerate the lean solution 13A.

In the CO₂ recovery device 10A, the CO₂ absorption liquid circulates between the CO₂ absorption column 14 and the absorption liquid regeneration column 15. The lean solution 13A of the CO₂ absorption liquid from which CO₂ is discharged absorbs CO₂ in the CO₂ absorption column 14 and becomes the rich solution 13C, and the rich solution 13C is supplied to the absorption liquid regeneration column 15. In the absorption liquid regeneration column 15, CO₂ is discharged from the supplied rich solution 13C, the rich solution 13C is regenerated and becomes the lean solution 13A, and thereafter, the lean solution 13A is supplied to the CO₂ absorption column 14. Here, the CO₂ absorption liquid is a generic name for the lean solution 13A of which CO₂ is discharged, a semi-rich solution 13B which absorbs a portion of CO₂ contained in the exhaust gas, and the rich solution 13C which absorbs CO₂ contained in the exhaust gas and is discharged from the CO₂ absorption column 14, and the name of the CO₂ absorption liquid is used to be changed according to a contain ratio of CO₂ at a location at which the CO₂ absorption liquid circulates through the CO₂ recovery device 10A.

Here, the CO₂ absorption liquid which can be used in the present invention is not particularly limited. However, for example, the CO₂ absorption liquid can include amine compounds such as alkanolamine and hindered amines having an alcoholic hydroxyl group. For example, the alkanolamine includes monoethanolamine, diethanolamine, triethanolamine, methyldiethanolamine, diisopropanolamine, diglycolamine or the like can be exemplified. However, in general, monoethanolamine (MEA) is preferably used. In addition, for example, the hindered amine having an alcoholic hydroxyl group includes 2-amino-2-methyl-1-propanol (AMP), 2-(ethylamino)-ethanol (EAE), 2-(methylamino)-ethanol (MAE) 2-(diethylamino)-ethanol (DEAE), or the like.

The cooling column 12 includes a cooling part 121 which cools the exhaust gas 11A. A circulation line L₁ through which cooling water W₁ circulates is provided between a bottom portion 12b side of the cooling column 12 and a top 12a side of the cooling part 121. A heat exchanger 122 which cools the cooling water W₁ and a circulation pump 123 which causes the cooling water W₁ to circulate through the circulation line L₁ are provided in the circulation line L₁.

In the cooling part 121, the exhaust gas 11A and the cooling water W₁ come into countercurrent contact with each other, and thus, the exhaust gas 11A is cooled to be the cooled exhaust gas 11B. The heat exchanger 122 cools the cooling water W₁ which is heated by heat exchange between the exhaust gas 11A and the cooling water W₁. The circulation pump 123 supplies the cooling water W₁, which flows downward toward the bottom portion 12b of the cooling column 12 via the heat exchanger 122, to the top 12a of the cooling part 121.

The CO₂ absorption column 14 includes a CO₂ absorption section 141 which is provided on a lower portion side of the CO₂ absorption column 14 and a washing section 142 which is provided on an upper portion side of the CO₂ absorption column 14.

The CO₂ absorption section 141 includes a first absorption section 141A and a second absorption section 141B which is disposed below the first absorption section 141A, in which the first absorption section 141A and the second absorption section 141B are disposed in the CO₂ absorption column 14 in a height direction of the CO₂ absorption column 14 and absorb CO₂ from the exhaust gas 11B. The inside of the first absorption section 141A is filled with a filling material to reach a filling height H₁. The inside of the second absorption section 141B is filled with a filling material to reach a filling height H₂.

The lean solution 13A generated by the absorption liquid regeneration column 15 is supplied to the first absorption section 141A as a CO₂ absorption liquid. The supplied lean solution 13A is sprayed from a spray nozzle 140A provided above the first absorption section 141A and flows downward toward the inside of a filling tank. In addition, the semi-rich solution 13B which absorbs a portion of CO₂ contained in the exhaust gas 11C by the first absorption section 141A is supplied to the second absorption section 141B. The supplied semi-rich solution 13B is sprayed from a lower-stage spray nozzle 140B provided above the second absorption section 141B to flow downward toward the inside of the filling tank.

A liquid storage portion 143A and a chimney tray 143B are provided between the first absorption section 141A and the second absorption section 141B, and the liquid storage portion 143A stores the semi-rich solution 13B which flows downward from a portion above the first absorption section 141A and stays below the first absorption section 141A. A first absorption liquid extraction line L₁₁ is provided in the liquid storage portion 143A, and the entire amount of the semi-rich solution 13B stored in the liquid storage portion 143A is extracted from an extraction position X of the CO₂ absorption column 14 and is introduced from an introduction position Y above the second absorption section 141B through the first absorption liquid extraction line L₁₁.

In the first absorption liquid extraction line L₁₁, a cooler 24 which cools the semi-rich solution 13B and a semi-rich solution pump 25 which supplies the semi-rich solution 13B to a portion above the second absorption section 141B are provided. In addition, the cooler 24 is configured such that a supply amount of a refrigerant can be adjusted by a controller (not shown). Moreover, the semi-rich solution pump 25 is configured such that an amount of the semi-rich solution 13B supplied to the second absorption section 141B by the controller can be adjusted. Moreover, in the present embodiment, the cooler 24 is configured to be cooled by the refrigerant. However, the present invention is not limited to this, that is, a pipe of the first absorption liquid extraction line L₁₁ may be exposed to be naturally cooled or may be cooled by air cooling using a fan.

A liquid storage portion 144A which stores rinse water W₂ washing an exhaust gas 11D in which CO₂ contained in the exhaust gas 11C is removed is provided on the bottom portion of the washing section 142. A circulation line L₂ is provided between the liquid storage portion 144A and the upper portion of the washing section 142, and the rinse water W₂ including the CO₂ absorption liquid recovered by the liquid storage portion 144A is supplied to the circulation line L₂ from the top side of the washing section 142 to circulate through the circulation line L2. In the circulation line L₂, a heat exchanger 21 which cools the rinse water W₂ and a circulation pump 22 which causes the rinse water W₂ including the CO₂ absorption liquid recovered by the liquid storage portion 144A via the heat exchanger 21 to circulate through the circulation line L₂ are provided.

In the CO₂ absorption section 141, the exhaust gas 11C containing CO₂ in the first absorption section 141A and the lean solution 13A of the CO₂ absorption liquid formed of an amine compound introduced into the column come into countercurrent contact with each other. As a result, the exhaust gas 11C becomes the exhaust gas 11D in which CO₂ contained in the exhaust gas 11C is removed, and the lean solution 13A becomes the semi-rich solution 13B. In addition, in the second absorption section 141B, the exhaust gas 11B which contains CO₂ introduced from the bottom portion side of the column and the semi-rich solution 13B which absorbs a portion of CO₂ come into countercurrent contact with each other. Accordingly, CO₂ contained in the exhaust gas 11B is absorbed by the semi-rich solution 13B by a chemical reaction. As a result, CO₂ contained in the exhaust gas 11B is removed and becomes the exhaust gas 11C in which concentrations of CO₂ are reduced, and the semi-rich solution 13B absorbs CO₂ more and becomes the rich solution 13C. In this way, the exhaust gases 11B and 11C containing CO₂ pass through the CO₂ absorption section 141, and thus, become the exhaust gas 11D in which CO₂ is removed. In addition, in the first absorption section 141A, the lean solution 13A becomes the semi-rich solution 13B which absorbs a portion of CO₂, and in the second absorption section 141B, the semi-rich solution 13B further absorbs CO₂ and becomes the rich solution 13C.

In the washing section 142, the exhaust gas 11D which passes through the first absorption section 141A and in which CO₂ is removed rises via a chimney tray 144B. In addition, the exhaust gas 11D comes into gas-liquid contact with the rinse water W₂ supplied from the top side of the washing section 142, and the CO₂ absorption liquid accompanied by the exhaust gas 11D is recovered by circulation washing and becomes a decarbonated exhaust gas 11E. In the decarbonated exhaust gas 11E, the mist is caught by a mist eliminator 145 and discharged from a column top 14a of the CO₂ absorption column 14 to the outside.

A rich solution supply pipe 50 is provided between the column bottom portion 14b of the CO₂ absorption column 14 and the upper portion of the absorption liquid regeneration column 15, and the rich solution 13C which absorbs CO₂ in the CO₂ absorption column 14 is supplied to the upper portion side of the absorption liquid regeneration column 15 through the rich solution supply pip3 50. In the rich solution supply pipe 50, a rich solution pump 51 which supplies the rich solution 13C absorbing CO₂ in the CO₂ absorption column 14 toward the absorption liquid regeneration column 15, and a rich/lean solution heat exchanger 52 which is heated by the lean solution 13A in which the rich solution 13C is heated in the absorption liquid regeneration column 15 and CO₂ is removed are provided.

A filling section 151 which discharges CO₂ from the rich solution 13C absorbing CO₂ by steam is provided inside the absorption liquid regeneration column 15. A circulation line L₄ through which a portion of the lean solution 13A flowing downward toward the column bottom portion 15b circulates is provided in a column bottom portion 15b of the absorption liquid regeneration column 15. In the circulation line L₄, a reboiler 31 which indirectly heats the lean solution 13A by saturated steam S to generate steam, an adjustment valve 32 which adjusts an amount of the saturated steam S supplied to the reboiler 31, and a circulation pump 33 which supplies the lean solution 13A of the column bottom portion 15b of the absorption liquid regeneration column 15 to a lower portion of the filling section 151 of the absorption liquid regeneration column 15 via the reboiler 31 are provided.

A gas exhaust line L₅ through which a CO₂ gas 41 accompanying steam is discharged is provided in a column top 15a of the absorption liquid regeneration column 15. In the gas exhaust line L₅, a condenser 42 which condenses moisture contained in the CO₂ gas 41 and a separation drum 43 which separates the CO₂ gas 41 and a condensed water W₅ from each other are provided. A CO₂ gas 44 from which the condensed water W₅ is separated is discharged from the upper portion of the separation drum 43 to the outside. A condensed water line L₆ through which the condensed water W₅ separated from the separation drum 43 is supplied to the upper portion of the absorption liquid regeneration column 15 is provided between the bottom portion of the separation drum 43 and the upper portion of the absorption liquid regeneration column 15. In the condensed water line L₆, a condensed water circulation pump 45 which supplies the condensed water W₅ separated from the separation drum 43 to the upper portion of the absorption liquid regeneration column 15 is provided.

In addition, a lean solution supply pipe 53 is provided on the column bottom portion 15b of the absorption liquid regeneration column 15 and the upper portion of the CO₂ absorption section 141 of the CO₂ absorption column 14, and the lean solution 13A of the CO₂ absorption liquid in the column bottom portion 15b of the absorption liquid regeneration column 15 is supplied to the upper portion side of the CO₂ absorption section 141 through the lean solution supply pipe 53. In the lean solution supply pipe 53, the rich/lean solution heat exchanger 52 which heats the rich solution 13C absorbing CO₂ by the lean solution 13A which is heated by steam in the absorption liquid regeneration column 15 and in which CO₂ is removed, a lean solution pump 54 which supplies the lean solution 13A in the column bottom portion 15b of the absorption liquid regeneration column 15 to the upper portion of the CO₂ absorption section 141, and a cooling part 55 which cools the lean solution 13A of the CO₂ absorption liquid to a predetermined temperature are provided. In addition, the cooling part 55 may be provided if necessary.

Next, in the CO₂ recovery device 10A according to the present embodiment, the extraction position X at which the semi-rich solution 13B is extracted to the outside of the first absorption liquid extraction line L₁₁ will be described.

In the present embodiment, the CO₂ absorption section 141 is configured of two absorption sections including the first absorption section 141A and the second absorption section 141B, the CO₂ absorption section 141 is divided into two sections, and the entire amount of the semi-rich solution 13B stored in the liquid storage portion 143A is extracted through the first absorption liquid extraction line L₁₁ from the extraction position X below the first absorption section 141A. In addition, after the semi-rich solution 13B is cooled by the cooler 24 provided in the first absorption liquid extraction line L₁₁, the semi-rich solution 13B is resupplied to the inside from the introduction position Y above the second absorption section 141B, and thus, oxidative deterioration of the absorption liquid is suppressed.

In the present embodiment, the extraction position X of the first absorption liquid extraction line L₁₁ at which the semi-rich solution 13B is extracted to the outside is determined based on a first reaction temperature distribution of the CO₂ absorption liquid inside the first absorption section 141A and a second reaction temperature distribution of the CO₂ absorption liquid inside the second absorption section 141B. Specifically, whether or not a peak liquid temperature is present in liquid temperatures in the liquid temperature distribution curves of both the reaction temperature distributions is confirmed, and the semi-rich solution 13B is extracted from a position at which a first peak liquid temperature (T_{A}) of the absorption liquid inside the first absorption section 141A and a second peak liquid temperature (T_{B}) of the absorption liquid inside the second absorption section 141B are generated. The reason why the presence or absence of the peak liquid temperatures is confirmed is because in a case where the peak liquid temperatures are not generated in the reaction temperature distributions of CO₂ absorption liquid in the first reaction temperature distribution, a reaction that CO₂ absorption liquid absorbs CO₂ does not progress much, and thus, CO₂ absorption efficiency is poor, which is not preferable.

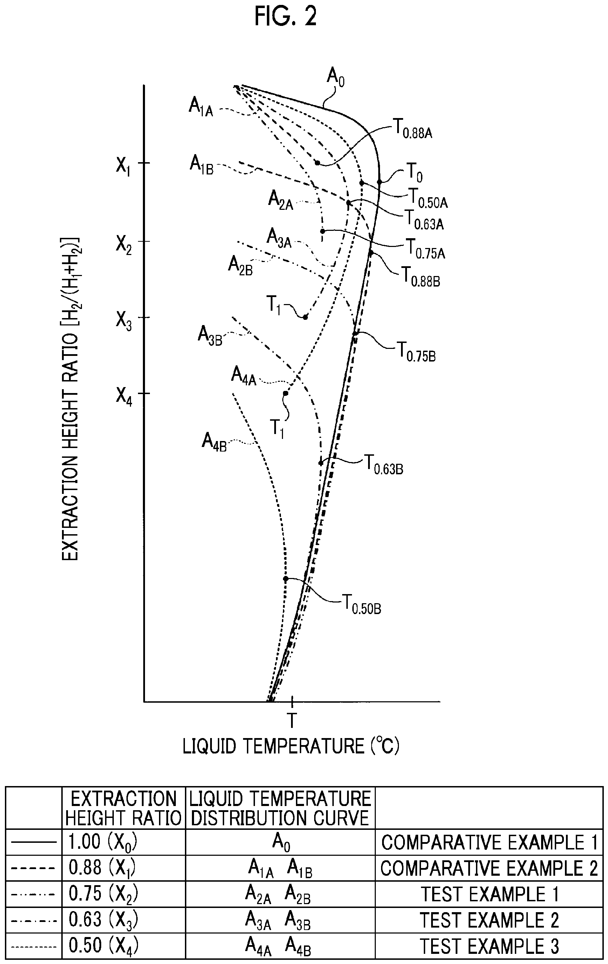

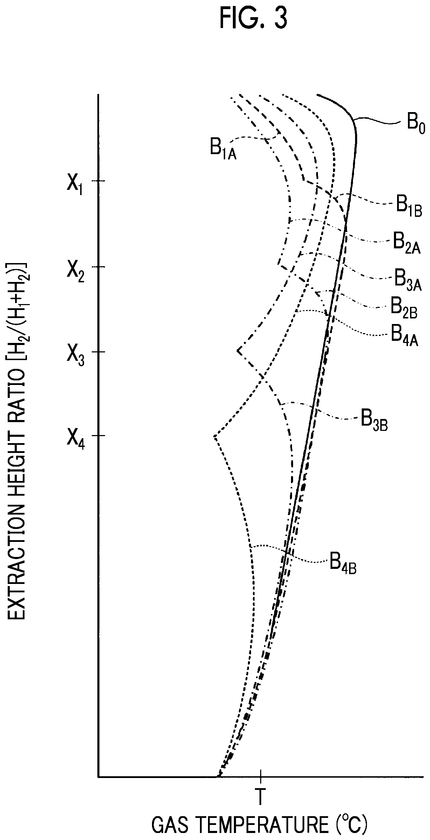

Fig. 2 is a graph showing a relationship between a liquid temperature of a CO₂ absorption liquid inside a CO₂ absorption section and an extraction height ratio of the CO₂ absorption column. Fig. 3 is a graph showing a relationship between a gas temperature of the exhaust gas introduced into the CO₂ absorption column and the extraction height ratio of the CO₂ absorption section. Fig. 2 shows the reaction temperature distribution when the CO₂ absorption liquid absorbs CO₂. Fig. 3 shows the gas temperature distribution when CO₂ contained in the exhaust gas is absorbed by the absorption liquid.

Here, a height of the filling tank at which CO₂ and the CO₂ absorption liquid come into contact with each other in the CO₂ absorption section 141 is referred to as a filling height. In addition, since the CO₂ absorption section 141 is divided into two sections, if the height of the filling tank of the first absorption section 141A is referred to as H₁ and the height of the filling tank of the second absorption section 141B is referred to as H₂, the filling height of the CO₂ absorption section 141 becomes the sum (H₁ + H₂) thereof.

In addition, in the present embodiment, in a case where the extraction position (hereinafter, simply referred to as the "extraction position (X)") of the semi-rich solution 13B is indicated by a ratio, when the sum (H = (H₁ + H₂)) of the filling heights (H₁ and H₂) of the first absorption section 141A and the second absorption section 141B is set to 1, the ratio is indicated by an "extraction height ratio (H₂ / (H₁ + H₂)) from the lower end of the filling layer of the second absorption section 141B.

Hereinafter, the extraction position X of the first absorption liquid extraction line L₁₁ at which the semi-rich solution 13B is extracted to the outside will be described based on differences of the reaction temperature distribution of the CO₂ absorption liquid. In addition, in Fig. 2, as the liquid temperature distribution curves, the liquid temperature distribution curves in the first absorption section 141A are indicated by first to fourth liquid temperature distribution curves A_{1A} to A_{4A}, and the liquid temperature distribution curves in the second absorption section 141B are indicated by first to fourth liquid temperature distribution curves A_{1B} to A_{4B}. In addition, the liquid temperature distribution curve of the related art in a case where the number of the CO₂ absorption sections is one is referred to as a liquid temperature distribution curve A₀.

Moreover, in Fig. 3, as the gas temperature distribution curves of the exhaust gas, the gas temperature distribution curves in the first absorption section 141A are indicated by first to fourth gas temperature distribution curves B_{1A} to B_{4A}, and the gas temperature distribution curves in the second absorption section 141B, are indicated by first to fourth gas temperature distribution curves B_{1B} to B_{4B}. In addition, the liquid temperature distribution curve of the related art in a case where the number of the CO₂ absorption sections is one is referred to as a liquid temperature distribution curve B₀.

First, the reaction that the CO₂ absorption liquid absorbs CO₂ contained in the exhaust gas inside the CO₂ absorption column 14 is an exothermic reaction. Accordingly, like the related art, in a case where the CO₂ absorption section 141 is not divided into two sections and the CO₂ absorption liquid is not extracted to the outside to be cooled (Comparative Example 1), as shown by the liquid temperature distribution curve A₀ (shown by a solid line in Fig. 2) in Fig. 2, the curve becomes one continuous curve formed in a mountain shape where the liquid temperature rapidly rises on the upper portion side of the CO₂ absorption section 141.

In this case, the lean solution 13A is introduced into the CO₂ absorption section 141, the reaction temperature of the lean solution 13A rapidly rises as the lean solution 13A flows down in the filling tank, and thus, a peak liquid temperature T₀ of a high temperature is generated in the vicinity of the upper portion side of the CO₂ absorption section 141. As a result, a reaction between amine compounds of a portion of the CO₂ absorption liquid and oxygen contained in the exhaust gas is accelerated, the oxidative deterioration is promoted, and a significant loss of the CO₂ absorption liquid occurs.

Next, in a case (Comparative Example 2) where the extraction is performed at a first extraction position X1 of an "extraction height ratio 0.88" as the extraction position X, in Fig. 2, the occurrence of the first peak liquid temperature in the first liquid temperature distribution curve A_{1A} inside the first absorption section 141A is not observed.

Meanwhile, in cases (Test Examples 1 to 3) where a second extraction position X₂ of an "extraction height ratio 0.75", a third extraction position X₃ of an "extraction height ratio 0.63", and a fourth extraction position X₄ of an "extraction height ratio 0.50" are set as the extraction position X, in the second liquid temperature distribution curve A_{2A}, the third liquid temperature distribution curve A_{3A}, and the fourth liquid temperature distribution curve A₄ₐ inside the first absorption section 141A, first peak liquid temperatures (T_{0.75A}, T_{0.63a}, and T_{0.50A}) in the reaction temperature distribution of the CO₂ absorption liquid occur.

In addition, in the cases of Test Examples 1 to 3, in the second liquid temperature distribution curve A_{2B}, the third liquid temperature distribution curve A_{3B}, and the fourth liquid temperature distribution curve A_{4B} inside the second absorption section 141B, second peak liquid temperatures (T_{0.75B}, T_{0.63B}, and T_{0.50B}) in the reaction temperature distribution of the CO₂ absorption liquid occur.

In this way, in the first absorption section 141A and the second absorption section 141B, the peak liquid temperatures occur, and thus, the temperature of the CO₂ absorption liquid is prevented from increasing. Accordingly, an oxidative deterioration reaction of the CO₂ absorption liquid is suppressed, the reaction of absorbing CO₂ favorably progresses, the function as the CO₂ absorption liquid is exhibited, which are preferable.

In addition, compared to the peak liquid temperature T₀ of Comparative Example 1 and the second peak liquid temperature T_{0.88B} in a case of the first extraction position X₁ of the "extraction height ratio 0.88" of Comparative Example 2 in the related art where the extraction of the liquid is not performed, the first peak liquid temperatures (T_{0.75A}, T_{0.63A}, and T_{0.50A}) of Test Examples 1 to 3 become a low peak liquid temperature, and each temperature curve of the second liquid temperature distribution curve A_{2A}, the third liquid temperature distribution curve A_{3A}, and the fourth liquid temperature distribution curve A_{4A} is formed in an arc shape protruding right, and the liquid temperature rapidly decreases continuously toward the lower portion with the peak liquid temperature as an apex. As a result, in the case where the extraction conditions of Test Examples 1 to 3 are set, a range in which the CO₂ absorption liquid is exposed to a high temperature region decreases, and the oxidative deterioration of the CO₂ absorption liquid can be largely suppressed.

In this way, according to the present embodiment, the semi-rich solution 13B absorbing a portion of CO₂ in the first absorption section 141A is extracted through the first absorption liquid extraction line L₁₁ below the first absorption section 141A at the extraction position X, the semi-rich solution 13B is cooled by the cooler 24 provided in the first absorption liquid extraction line L₁₁, and thus, measures for suppressing the oxidative deterioration of the CO₂ absorption liquid are performed.

In this case, in the present embodiment, the extraction position X at which the semi-rich solution 13B is extracted to the outside through the first absorption liquid extraction line L₁₁ is set to the positions each having the first peak liquid temperature (T_{A}) in the first reaction temperature distribution of the absorption liquid inside the first absorption section 141A and the second peak liquid temperature (T_{B}) in the second reaction temperature distribution of the absorption liquid inside the second absorption section 141B, it is possible to largely suppress the oxidative deterioration of the CO₂ absorption liquid.

In addition, when the first peak liquid temperature of the upper stage and the second peak liquid temperature of the lower stage are compared with each other, in a case where the extraction is performed at the third extraction position X₃ of the "extraction height ratio 0.63" and the fourth extraction position X₄ of the "extraction height ratio 0.50" in which the second liquid temperature (T_{B}) of the absorption liquid inside the second peak absorption section 141B is lower than (T_{A} > T_{B}) the first peak liquid temperature (T_{A}) of the absorption liquid inside the first absorption section 141A, the first peak liquid temperatures (T_{0.63A} and T_{0.50A}) are more preferably clear and a temperature gradient is sharp.

In addition, preferably, the liquid temperature (T₁) when the semi-rich solution 13B is extracted at the extraction position X is 45°C or more. This is because in a case where the liquid temperature (T₁) when the semi-rich solution 13B is extracted from the extraction position X is 45°C or more, the amount of heat removed by cooling of the cooler 24 provided in the first absorption liquid extraction line L₁₁ increases, and thus, effects of decreasing the oxidative deterioration increase.

In Fig. 2, for example, as the liquid temperature (T (°C)) of a horizontal axis, temperatures of 50°C to 60°C are exemplified. However, the liquid temperatures may be appropriately changed according to the types or absorption conditions of the CO₂ absorption liquid, and thus, the present invention is not limited to this.

In addition, preferably, the temperature difference of the semi-rich solution 13B cooled by the cooler 24 of the first absorption liquid extraction line L₁₁ is 10°C or more.

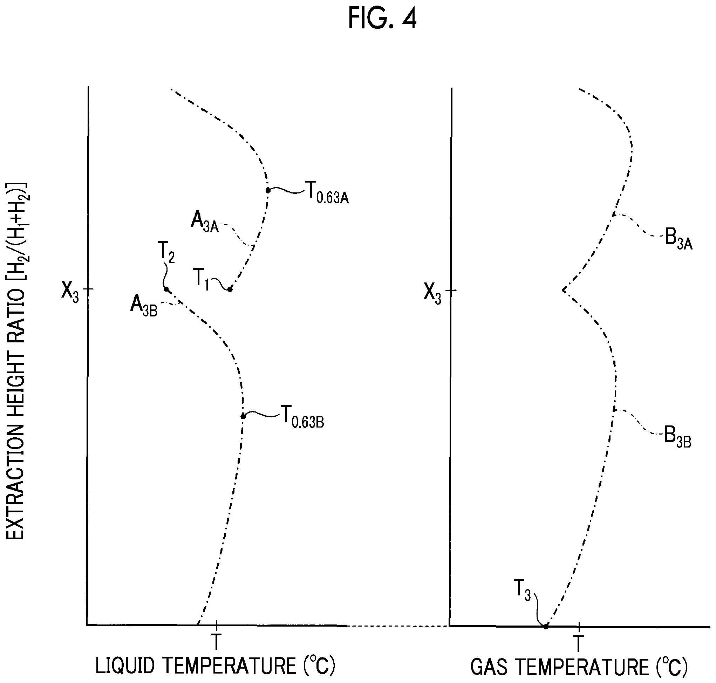

Fig. 4 is a graph obtained by comparing the liquid temperature and the gas temperature with each other in a case where the third extraction position X₃ of the "extraction height ratio 0.63" is set as the extraction position X (Test Example 2).

As shown in Fig. 4, in the first absorption liquid extraction line L₁₁, preferably, a temperature difference (T₁ - T₂) between the liquid temperature (T₁) when the semi-rich solution 13B is extracted and the liquid temperature (T₂) when the semi-rich solution 13B cooled by the cooler 24 is resupplied is 10°C or more. This is because in a case where the temperature difference is 10°C or more, the amount of the heat removed by the cooling of the cooler 24 increases, which increases the effects of decreasing the oxidative deterioration.

In addition, as shown in Fig. 1 of the present embodiment, in the case where the cooling column 12 which cools the exhaust gas 11A containing CO₂ and supplies the cooled exhaust gas 11B to the absorption column 14 is provided, preferably, the liquid temperature (T₂) of the semi-rich solution 13B which is introduced to the portion above the second absorption section 141B and is cooled by the cooler 24 to be resupplied is less than or equal to the cooled exhaust gas temperature (introduction gas temperature (T₃)) which is cooled by the cooling column 12 and is supplied to the CO₂ absorption column 14.

Accordingly, by setting the liquid temperature (T₂) of the cooled semi-rich solution 13B to be equal to or less than the introduction gas temperature (T₃) of the exhaust gas 11A cooled by the cooling column 12, it is possible to decrease the peak liquid temperature in the second absorption section 141B. As a result, effects of decreasing the oxidative deterioration of the CO₂ absorption liquid in the second absorption section 141B can be exerted.

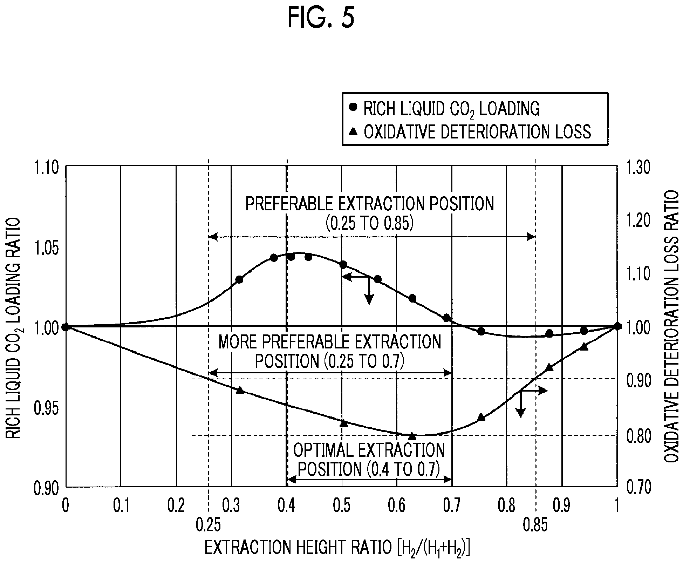

Fig. 5 is a graph showing a relationship among the extraction height ratio (horizontal axis), a rich liquid CO₂ loading ratio (left vertical axis), and an oxidative deterioration loss ratio (right vertical axis). In addition, the CO₂ loading ratio is obtained by CO₂ (mol) / amine solution (mol).

As shown in Fig. 5, the rich liquid CO₂ loading ratio (hereinafter, referred to as a "CO₂ loading ratio") in which CO₂ contained in the CO₂ absorption liquid is recovered by the CO₂ recovery device of the related art in which the extraction is not performed is set to 1.0 (reference value), if effects at the CO₂ loading ratio in the CO₂ recovery device are reviewed, the CO₂ loading ratio becomes 1.04 around the extraction height ratio 0.4.

In addition, if effects in the oxidative deterioration loss ratio are reviewed, as shown in Fig. 5, in a case where the extraction height ratio is 0.63, an oxidative deterioration suppression effect is 20%, and thus, the oxidative deterioration suppression effect was large.

Accordingly, from the result of Fig. 5, preferably, the extraction height ratio at the extraction position X considering both the CO₂ loading ratio and the oxidative deterioration loss ratio is 0.25 to 0.85. The reason why the extraction height ratio is 0.25 to 0.85 is because the oxidative deterioration suppression effect is preferably 10% or more over the entire range.

In addition, more preferably, the extraction height ratio at the extraction position X is 0.25 to 0.7. The reason why the extraction height ratio is 0.25 to 0.7 is because a CO₂ loading improvement effect is exerted in consideration of CO₂ absorption efficiency.

Most preferably, the extraction height ratio at the extraction position X is optimally set to 0.4 to 0.7. The reason why the extraction height ratio at the extraction position X is 0.4 to 0.7 is because the oxidative deterioration suppression effect is 15% or more and the CO₂ loading improvement effect is exerted. By increasing the CO₂ loading ratio, it is possible to decrease steam consumption of the reboiler 31 in the absorption liquid regeneration column 15.

Next, the entire operation of the CO₂ recovery device 10A according to the present embodiment will be described. For example, the exhaust gas 11A containing CO₂ discharged from a boiler or the like is introduced into the cooling column 12. In addition, the introduced exhaust gas 11A comes into countercurrent contact with the cooling water W₁ to be cooled and becomes the cooled exhaust gas 11B. The cooled exhaust gas 11B is introduced into the CO₂ absorption column 14 via the flue 16. The exhaust gas 11B introduced into the CO₂ absorption column 14 comes into countercurrent contact with the CO₂ absorption liquid containing the amine compounds such as alkanolamine in the first absorption section 141A and the second absorption section 141B of the CO₂ absorption section 141, CO₂ contained in the exhaust gas 11B is absorbed by the CO₂ absorption liquid, and the exhaust gas 11B becomes the exhaust gas 11D in which CO₂ is removed.

The exhaust gas 11D in which CO₂ is removed rises via the chimney tray 144B, comes into gas-liquid contact with the rinse water W₂ supplied from the top side of the washing section 142, and becomes the decarbonated exhaust gas 11E in which the CO₂ absorption liquid accompanied by the exhaust gas 11D is recovered by the circulation washing. The mist contained in the decarbonated exhaust gas 11E is caught by the mist eliminator 145, and the decarbonated exhaust gas 11E is discharged to the outside from the column top 14a of the CO₂ absorption column 14.

The rich solution 13C of the CO₂ absorption liquid which absorbs CO₂ in the CO₂ absorption column 14 performs heat exchange with the lean solution 13A in the rich/lean solution heat exchanger 52 via the rich solution supply pipe 50, and thereafter, is supplied to the upper portion side of the absorption liquid regeneration column 15 by the rich solution pump 51.

While the rich solution 13C of the CO₂ absorption liquid supplied to the absorption liquid regeneration column 15 flows downward in the filling section 151 of the absorption liquid regeneration column 15, CO₂ is removed by the steam, and thus, the rich solution 13C becomes the lean solution 13A. A portion of the lean solution 13A circulates through the circulation line L₄ by the circulation pump 33, is heated by the saturated steam S in the reboiler 31, and steam is generated inside the absorption liquid regeneration column 15. After the heated saturated steam S becomes steam condensed water W4. After the moisture of the CO₂ gas 41 removed from the CO₂ absorption liquid is condensed by the condenser 42, the CO₂ gas 41 is discharged from the upper portion of the separation drum 43 to the outside as the CO₂ gas 44 from which the condensed water W₅ is separated. The separated condensed water W₅ is supplied to the absorption liquid regeneration column 15.

The lean solution 13A extracted from the column bottom portion 15b of the absorption liquid regeneration column 15 performs heat exchange with the rich solution 13C by the rich/lean solution heat exchanger 52 via the lean solution supply pipe 53, and thereafter, is supplied to the upper portion of the CO₂ absorption section 141 of the CO₂ absorption column 14 by the lean solution pump 54. The lean solution 13A supplied to the upper portion side of the CO₂ absorption section 141 absorbs CO₂ contained in the exhaust gas 11C in the first absorption section 141A, becomes the semi-rich solution 13B, and is extracted through the first absorption liquid extraction line L₁₁ at the extraction position X below the first absorption section 141A. The extracted semi-rich solution 13B is cooled to a predetermined temperature range by the cooler 24, and thereafter, is supplied to the introduction position Y above the second absorption section 141B by the semi-rich solution pump 25, absorbs CO₂ contained in the exhaust gas 11B in the second absorption section 141B, and becomes the rich solution 13C. The rich solution 13C is extracted from the column bottom portion 14b of the CO₂ absorption column 14 and is supplied to the absorption liquid regeneration column 15.

According to the present embodiment, the semi-rich solution 13B which absorbs a portion of CO₂ in the first absorption section 141A is extracted at the extraction position X through the first absorption liquid extraction line L₁₁ below the first absorption section 141A, the semi-rich solution 13B is cooled by the cooler 24 provided in the first absorption liquid extraction line L₁₁, and thus, the oxidative deterioration of the CO₂ absorption liquid is suppressed.

In this case, the extraction position X at which the semi-rich solution 13B is extracted to the outside through the first absorption liquid extraction line L₁₁ is set to the positions each having the first peak liquid temperature (T_{A}) in the first reaction temperature distribution of the absorption liquid inside the first absorption section 141A and the second peak liquid temperature (T_{B}) in the second reaction temperature distribution of the absorption liquid inside the second absorption section 141B, it is possible to largely suppress the oxidative deterioration of the CO₂ absorption liquid.

Hereinbefore, according to the present embodiment, it is possible to reduce the loss caused by the oxidative deterioration of CO₂ absorption liquid, and it is possible to reduce emission of volatile organic compounds (VOC) caused by the exhaust of oxidative deterioration materials.

Here, the case where the cooler 24 performing cooling using an intermediate cooling refrigerant is used is not particularly limited. However, for example, a plate heat exchanger is used as the cooler 24. By using this plate heat exchanger, it is possible to decrease the temperature difference between the semi-rich solution 13B side and the refrigerant side, and thus, it is possible to increase an amount of the exchanged heat in the intermediate cooling.

### Second Embodiment

Next, a CO₂ recovery device according to a second embodiment of the present invention will be described. The second embodiment will be described using the CO₂ recovery device shown in Fig. 1 described in the first embodiment. In addition, descriptions with respect to the same configurations as those of the first embodiment are omitted.

In the CO₂ recovery device of the second embodiment, when the semi-rich solution 13B absorbing a portion of CO₂ in the first absorption section 141A is extracted at the extraction position X through the first absorption liquid extraction line L₁₁ below the first absorption section 141A, unlike the CO₂ recovery device of the first embodiment, without considering the first peak liquid temperature (T_{A}) of the first reaction temperature distribution of the absorption liquid inside the first absorption section 141A and the second peak liquid temperature (T_{B}) of the second reaction temperature distribution of the absorption liquid inside the second absorption section 141B, only the extraction height ratio at the extraction position X of the semi-rich solution 13B is defined to be 0.25 to 0.85. In this case, as shown in Fig. 5, the reason why the extraction height ratio is 0.25 to 0.85 is because the oxidative deterioration suppression effect is preferably 10% or more over the entire range.

In addition, more preferably, the extraction height ratio at the extraction position X is 0.25 to 0.7. The reason why the extraction height ratio is 0.25 to 0.7 is because a CO₂ loading improvement effect is exerted in consideration of CO₂ absorption efficiency.

Most preferably, the extraction height ratio at the extraction position X is optimally set to 0.4 to 0.7. The reason why the extraction height ratio at the extraction position X is 0.4 to 0.7 is because the oxidative deterioration suppression effect is 15% or more and the CO₂ loading improvement effect is exerted. By increasing the CO₂ loading ratio, it is possible to decrease steam consumption of the reboiler 31 in the absorption liquid regeneration column 15.

According to the present embodiment, the semi-rich solution 13B which absorbs a portion of CO₂ in the first absorption section 141A is extracted at the extraction position X through the first absorption liquid extraction line L₁₁ below the first absorption section 141A, the semi-rich solution 13B is cooled by the cooler 24 provided in the absorption liquid extraction line L₁₁, and thus, the oxidative deterioration of the CO₂ absorption liquid is suppressed.

In this case, the extraction height ratio at the extraction position X at which the semi-rich solution 13B is extracted to the outside through the first absorption liquid extraction line L₁₁ is set to 0.25 to 0.85 and more preferably, 0.25 to 0.7, and thus, it is possible to consider both the CO₂ loading ratio and the oxidative deterioration loss ratio of the CO₂ absorption liquid.

As a result, it is possible to suppress the oxidative deterioration of a CO₂ absorption liquid and to suppress a loss of the CO₂ absorption liquid without largely increasing a reaction liquid temperature of the CO₂ absorption liquid in the CO₂ absorption column 14. Accordingly, it is possible to decrease components which have oxidatively deteriorated from being discharged to the outside. In addition, the CO₂ loading improvement effect is exerted, and thus, it is possible to decrease the steam consumption of the reboiler 31 in the absorption liquid regeneration column 15.

In the second embodiment, preferably, the liquid temperature (T₁) when the semi-rich solution 13B is extracted at the extraction position X is 45°C or more. This is because in a case where the liquid temperature (T₁) when the semi-rich solution 13B is extracted from the extraction position X is 45°C or more, the amount of heat removed by cooling of the cooler 24 provided in the first absorption liquid extraction line L₁₁ increases, and thus, effects of decreasing the oxidative deterioration increase.

In addition, preferably, the temperature difference of the semi-rich solution 13B cooled by the cooler 24 of the first absorption liquid extraction line L₁₁ is 10°C or more.

In addition, preferably, the liquid temperature (T₂) of the cooled semi-rich solution 13B introduced at the introduction position Y above the second absorption section 141B is lower by 10°C or more than the liquid temperature (T₁) of the semi-rich solution 13B when being extracted at the extraction position X (the temperature difference (T₁ - T₂) is 10°C or more). This is because in a case where the temperature difference is 10°C or more, the amount of the heat removed by the cooling of the cooler 24 increases, which increases the effects of decreasing the oxidative deterioration.

In addition, as shown in Fig. 1, in the case where the cooling column 12 in which the exhaust gas 11A comes into contact with water to be cooled is provided on the upstream side of the CO₂ absorption column 14, preferably, the liquid temperature (T₂) of the semi-rich solution 13B which is introduced to the portion above the second absorption section 141B and is cooled by the cooler 24 is less than or equal to the exhaust gas temperature (gas temperature (T₃)) which is cooled by the cooling column 12 and is introduced to the CO₂ absorption column 14. Accordingly, it is possible to suppress the increase in the temperature in the second absorption section 141B, and it is possible to exert effects of decreasing the oxidative deterioration.

Hereinbefore, according to the present embodiment, the extraction height ratio at the extraction position X at which the semi-rich solution 13B is extracted to the outside through the first absorption liquid extraction line L₁₁ is set to 0.25 to 0.85 and more preferably, 0.25 to 0.7, and thus, it is possible to reduce the loss caused by the oxidative deterioration of CO₂ absorption liquid, and it is possible to reduce emission of volatile organic compounds (VOC) caused by the exhaust of oxidative deterioration materials.

### Third Embodiment

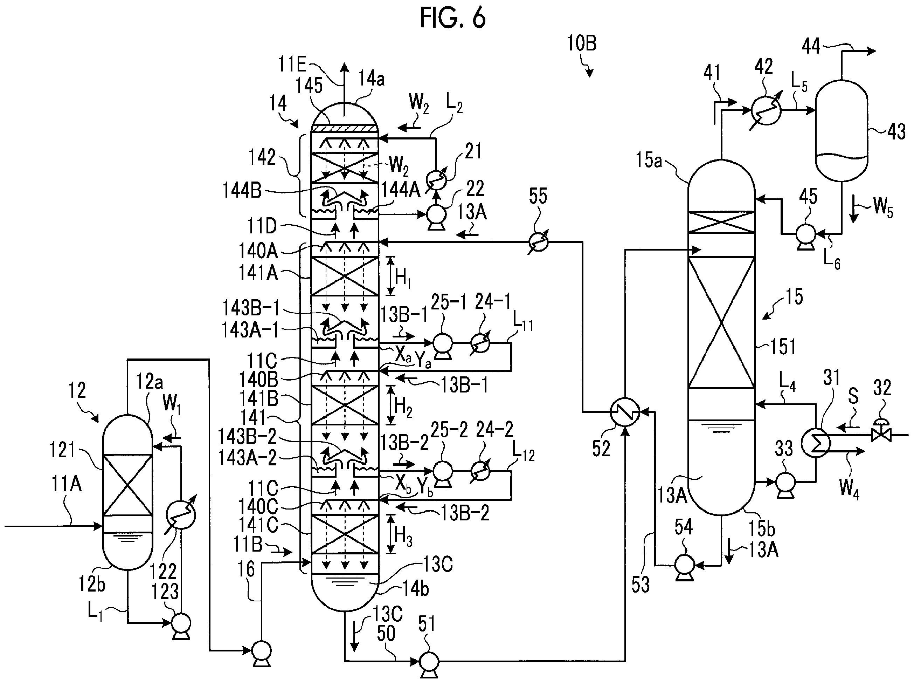

A CO₂ recovery device according to a third embodiment of the present invention will be described with reference to the drawings. Fig. 6 is a schematic diagram of the CO₂ recovery device according to the third embodiment. In addition, the same reference numerals are assigned to the same portions as those of the first embodiment, and descriptions thereof are omitted.

As shown in Fig. 6, a CO₂ recovery device 10B according to the third embodiment further includes a third absorption section 141C which is disposed below the second absorption section 141B inside the CO₂ absorption column 14 in the height direction of the CO₂ absorption column 14 and absorbs CO₂ from the cooled exhaust gas 11B and a second absorption liquid extraction line L₁₂ which is provided between the second absorption section 141B and the third absorption section 141C and through which the CO₂ absorption liquid absorbing CO₂ contained in the exhaust gas in the second absorption section 141B is extracted by the CO₂ absorption column 14 and the CO₂ absorption liquid is cooled to be resupplied to the third absorption section 141C in the CO₂ absorption column 14, in addition to the first absorption section 141A and the second absorption section 141B which are the CO₂ absorption section 141 in the CO₂ recovery device 10A of the first embodiment.

In the CO₂ absorption section 141 having three stages, the inside of the first absorption section 141A is filled with a filling material to reach the filling height H₁. The inside of the second absorption section 141B is filled with a filling material to reach the filling height H₂. The inside of the third absorption section 141C is filled with a filling material to reach the filling height H₃.

A first liquid storage portion 143A-1 and a first chimney tray 143B-1 are provided between the first absorption section 141A and the second absorption section 141B, and the first liquid storage portion 143A-1 stores the semi-rich solution 13B-1 which flows downward from the portion above the first absorption section 141A and stays below the first absorption section 141A. The first absorption liquid extraction line L₁₁ is provided in the first liquid storage portion 143A-1, and the entire amount of the semi-rich solution 13B-1 stored in the first liquid storage portion 143A-1 is extracted from the first extraction position Xₐ of the CO₂ absorption column 14 and is introduced from a first introduction position Yₐ above the second absorption section 141B through the first absorption liquid extraction line L₁₁. In the first absorption liquid extraction line L₁₁, a first cooler 24-1 which cools the semi-rich solution 13B-1 and a first semi-rich solution pump 25-1 which supplies the semi-rich solution 13B-1 to the portion above the second absorption section 141B are provided. The supplied semi-rich solution 13B-1 is sprayed from the lower-stage spray nozzle 140B provided above the second absorption section 141B to flow downward toward the inside of the filling tank of the second absorption section 141B.

In addition, a second liquid storage portion 143A-2 and a second chimney tray 143B-2 are provided between the second absorption section 141B and the third absorption section 141C, and the second liquid storage portion 143A-2 stores the semi-rich solution 13B-2 which flows downward from a portion above the second absorption section 141B and stays below second absorption section 141B. The second absorption liquid extraction line L₁₂ is provided in the second liquid storage portion 143A-2, and the entire amount of the semi-rich solution 13B-2 stored in the second liquid storage portion 143A-2 is extracted from a second extraction position X_{b} of the CO₂ absorption column 14 and is introduced from a second introduction position Y_{b} above the third absorption section 141C through the second absorption liquid extraction line L₁₂. In the second absorption liquid extraction line L₁₂, a second cooler 24-2 which cools the semi-rich solution 13B-2 and a second semi-rich solution pump 25-2 which supplies the semi-rich solution 13B-2 to a portion above the third absorption section 141C are provided. The supplied semi-rich solution 13B-2 is sprayed from the lower-stage spray nozzle 140C provided above the third absorption section 141C to flow downward toward the inside of the filling tank of the third absorption section 141C.

In the present embodiment, the CO₂ absorption section 141 is configured of the absorption sections of three stages including the first absorption section 141A, the second absorption section 141B, and the third absorption section 141C, and the CO₂ absorption section 141 is divided into three sections. The entire amount of the semi-rich solution 13B-1 stored in the first liquid storage portion 143A-1 is extracted through the first absorption liquid extraction line L₁₁ from the first extraction position Xₐ below the first absorption section 141A and is cooled by the first cooler 24-1 provided in the first absorption liquid extraction line L₁₁, and thereafter, is introduced from the first introduction position Yₐ above the second absorption section 141B to be returned to the inside, and thus, the oxidative deterioration of the CO₂ absorption liquid is suppressed.

In the present embodiment, the first extraction position Xₐ of the first absorption liquid extraction line L₁₁ at which the semi-rich solution 13B-1 is extracted to the outside is predetermined based on the first reaction temperature distribution of the CO₂ absorption liquid inside the first absorption section 141A and the second reaction temperature distribution of the CO₂ absorption liquid inside the second absorption section 141B. In addition, whether or not the peak liquid temperature is present in liquid temperatures in liquid temperature distribution curves of both the reaction temperature distributions is confirmed, and the semi-rich solution 13B-1 is extracted from a position at which the first peak liquid temperature (T_{A}) of the absorption liquid inside the first absorption section 141A and the second peak liquid temperature (T_{B}) of the absorption liquid inside the second absorption section 141B are generated.

The reason why the presence or absence of the peak liquid temperatures is confirmed is because in a case where the peak liquid temperatures are not generated in the reaction temperature distributions of CO₂ absorption liquid in the first reaction temperature distribution, a reaction that CO₂ absorption liquid absorbs CO₂ does not progress much, and thus, CO₂ absorption efficiency is poor, which is not preferable.

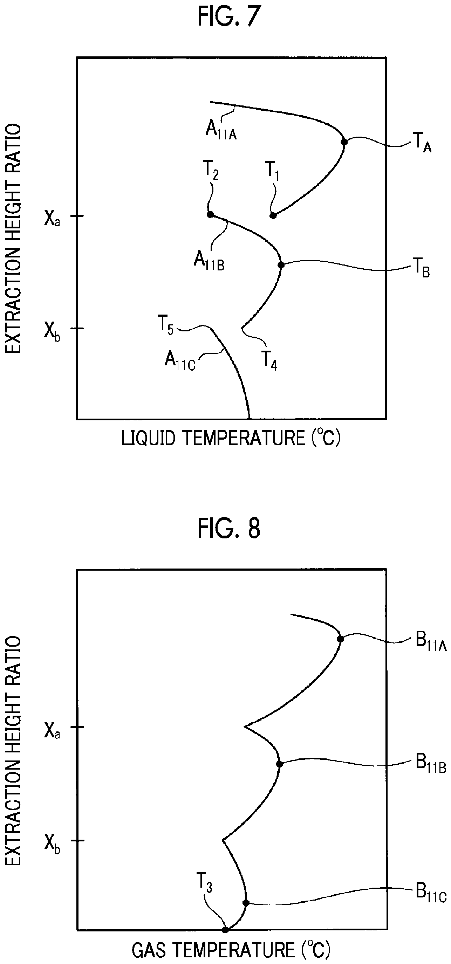

Fig. 7 is a graph showing a relationship between the liquid temperature of the CO₂ absorption liquid inside the CO₂ absorption section and the extraction height ratio of the CO₂ absorption section. Fig. 8 is a graph showing a relationship between the gas temperature of the exhaust gas introduced into the CO₂ absorption column and the extraction height ratio of the CO₂ absorption section.

Here, a height of the filling tank at which CO₂ and the CO₂ absorption liquid come into contact with each other in the CO₂ absorption section 141 is referred to a filling height. In addition, since the CO₂ absorption section 141 is divided into three sections, if the filling height of the first absorption section 141A is referred to as H₁, the filling height of the second absorption section 141B is referred to as H₂, and the filling height of the third absorption section 141C is referred to as H₃, the filling height of the CO₂ absorption section 141 becomes the sum (H₁ + H₂ + H₃) thereof.

Here, in the present embodiment, in a case where the first extraction position Xₐ of the semi-rich solution 13B-1 is indicated by a ratio, when the sum (H = (H₁ + H₂ +H₃)) of the filling heights (H₁, H₂, and H₃) of the first absorption section 141A to the third absorption section 141C is set to 1, the ratio is indicated by an "extraction height ratio ((H₂ + H₃) / (H₁ + H₂ + H₃)) from the column bottom portion (lower side) of the CO₂ absorption column 14.

In addition, in a case where the first extraction position X_{b} of the semi-rich solution 13B-2 is indicated by a ratio, when the sum (H = (H₁ + H₂ +H₃)) of the filling heights (H₁, H₂, and H₃) of the first absorption section 141A to the third absorption section 141C is set to 1, the ratio is indicated by an "extraction height ratio ((H₃) / (H₁ + H₂ + H₃)) from the column bottom portion (lower side) of the CO₂ absorption column 14.

In Fig. 7, as the liquid temperature distribution curves, the liquid temperature distribution curve in the first absorption section 141A is indicated by a liquid temperature distribution curves A_{11A}, the liquid temperature distribution curve in the second absorption section 141B is indicated by a liquid temperature distribution curve A_{11B}, and the liquid temperature distribution curve in the third absorption section 141C is indicated by a liquid temperature distribution curve A_{11C}.

In addition, in Fig. 8, as the gas temperature distribution curves of the exhaust gas, the gas temperature distribution curve in the first absorption section 141A is indicated by a gas temperature distribution curves B_{11A}, the gas temperature distribution curve in the second absorption section 141B is indicated by a gas temperature distribution curve B_{11B}, and the gas temperature distribution curve in the third absorption section 141C is indicated by a gas temperature distribution curve B_{11C}.

As shown in Fig. 7, the first peak liquid temperature (T_{A}) in the reaction temperature distribution of the CO₂ absorption liquid in the liquid temperature distribution curve A_{11A} inside the first absorption section 141A and the second peak liquid temperature (T_{B}) in the reaction temperature distribution of the CO₂ absorption liquid in the liquid temperature distribution curve A_{11B} inside the second absorption section 141B are respectively generated.

In this way, in the first absorption section 141A and the second absorption section 141B, the peak liquid temperatures occur, and thus, the oxidative deterioration reaction of the CO₂ absorption liquid is suppressed, the reaction of absorbing CO₂ favorably progresses, the function as the CO₂ absorption liquid is exhibited, which are all preferable.

In addition, preferably, the liquid temperature (T₁) when the semi-rich solution 13B-1 is extracted at the first extraction position Xₐ is 45°C or more. This is because in a case where the liquid temperature (T₁) when the semi-rich solution 13B-1 is extracted from the first extraction position Xₐ is 45°C or more, the amount of heat removed by cooling of the first cooler 24-1 increases, and thus, effects of decreasing the oxidative deterioration increase.

Moreover, preferably, the liquid temperature (T₄) when the semi-rich solution 13B-2 is extracted at the second extraction position X_{b} is 45°C or more. This is because in a case where the liquid temperature (T₄) when the semi-rich solution 13B-2 is extracted from the second extraction position X_{b} is 45°C or more, the amount of heat removed by cooling of the second cooler 24-2 increases, and thus, effects of decreasing the oxidative deterioration increase.

In the first absorption liquid extraction line L₁₁, preferably, a temperature difference (T₁ - T₂) between the liquid temperature (T₁) when the semi-rich solution 13B-1 is extracted and the liquid temperature (T₂) when the semi-rich solution 13B-1 cooled by the first cooler 24-1 is resupplied is 10°C or more. This is because in a case where the temperature difference is 10°C or more, the amount of the heat removed by the cooling of the first cooler 24-1 increases, which increases the effects of decreasing the oxidative deterioration.

In addition, in the second absorption liquid extraction line L₁₂, preferably, a temperature difference (T₅ - T₄) between the liquid temperature (T₄) when the semi-rich solution 13B-2 is extracted and the liquid temperature (T₅) when the semi-rich solution 13B-2 cooled by the second cooler 24-2 is resupplied is 10°C or more. This is because in a case where the temperature difference is 10°C or more, the amount of the heat removed by the cooling of the second cooler 24-2 increases, which increases the effects of decreasing the oxidative deterioration.

In addition, as shown in Fig. 6 of the present embodiment, in the case where the cooling column 12 which cools the exhaust gas 11A containing the CO₂ absorption liquid and supplies the cooled exhaust gas 11B to the CO₂ absorption column 14 is provided, preferably, the liquid temperature (T₂) of the semi-rich solution 13B-1 which is introduced to the portion above the second absorption section 141B and is cooled by the first cooler 24-1 is less than or equal to the exhaust gas temperature (gas temperature (T₃)) which is cooled by the cooling column 12 and is introduced to the CO₂ absorption column 14.

Accordingly, by setting the liquid temperature (T₂) of the cooled semi-rich solution 13B-1 to be equal to or less than the gas temperature (T₃) of the exhaust gas 11B cooled by the cooling column 12, it is possible to decrease the peak liquid temperature in the second absorption section 141B. As a result, effects of decreasing the oxidative deterioration of the CO₂ absorption liquid in the second absorption section 141B can be exerted.

In addition, preferably, the liquid temperature (T₅) of the semi-rich solution 13B-2 which is introduced to the portion above the third absorption section 141C and is cooled by the second cooler 24-2 is less than or equal to the exhaust gas temperature (gas temperature (T₃)) which is cooled by the cooling column 12 and is introduced to the CO₂ absorption column 14.

Therefore, by setting the liquid temperature (T₅) of the cooled semi-rich solution 13B-2 to be equal to or less than the gas temperature (T₃) of the exhaust gas 11A cooled by the cooling column 12, it is possible to decrease the peak liquid temperature in the third absorption section 141C. As a result, effects of decreasing the oxidative deterioration of the CO₂ absorption liquid in the third absorption section 141C can be exerted.

Moreover, in a case where the CO₂ absorption section having the plurality of stages is provided, as shown in Fig. 5, preferably, the extraction height ratio at the extraction position of any one of the first extraction position Xₐ and the second extraction position X_{b} is 0.25 to 0.85. The reason why the extraction height ratio is 0.25 to 0.85 is because the oxidative deterioration suppression effect is preferably 10% or more over the entire range.

In addition, more preferably, the extraction height ratio at the first extraction position Xₐ or the second extraction position X_{b} is 0.25 to 0.7. The reason why the extraction height ratio is 0.25 to 0.7 is because a CO₂ loading improvement effect is exerted in consideration of CO₂ absorption efficiency.

Most preferably, the extraction height ratio at the first extraction position Xₐ or the second extraction position X_{b} is set to 0.4 to 0.7. The reason why the extraction height ratio is 0.4 to 0.7 is because the oxidative deterioration suppression effect is 15% or more and the CO₂ loading improvement effect is exerted.

In addition, in the present embodiment, the extraction position is defined considering the peak liquid temperatures of at least two stages when the CO₂ absorption section 141 is divided into the three sections. However, similarly to the second embodiment, at least one stage of the extraction height ratios of the first extraction position Xₐ and the second extraction position X_{b} may be set 0.25 to 0.85 without considering the peak liquid temperatures.

Hereinafter, according to the present embodiment, in the case where the CO₂ absorption section 141 is divided into three sections, it is possible to reduce the loss caused by the oxidative deterioration of CO₂ absorption liquid, and it is possible to reduce emission of volatile organic compounds (VOC) caused by the exhaust of oxidative deterioration materials.

### Reference Signs List

- 10A, 10B:: CO₂ recovery device
- 11A to 11D:: exhaust gas
- 11E:: decarbonated exhaust gas
- 12:: cooling column
- 13A:: lean solution
- 13B, 13B-1, 13B-2:: semi-rich solution
- 13C:: rich solution
- 14:: CO₂ absorption column
- 15:: absorption liquid regeneration column
- 24:: cooler
- L₁₁:: first absorption liquid extraction line
- L₁₂:: second absorption liquid extraction line
- 50:: rich solution supply pipe
- 53:: lean solution supply pipe
- 141:: CO₂ absorption section
- 141A:: first absorption section
- 141B:: second absorption section
- 141C:: third absorption section
- 142:: washing section

## Claims

1. A CO₂ recovery device having an absorption column which causes a gas containing CO₂ and a CO₂ absorption liquid to come into countercurrent contact with each other to absorb CO₂ from the gas, the device comprising:
a CO₂ absorption section which includes a first absorption section absorbing CO₂ from the gas and a second absorption section positioned below the first absorption section, the first absorption section and the second absorption section being disposed in the absorption column in a height direction of the absorption column; and
a first absorption liquid extraction line which is provided between the first absorption section and the second absorption section, and through which a CO₂ absorption liquid absorbing CO₂ contained in the gas in the first absorption section is extracted from the absorption column and the CO₂ absorption liquid is cooled and resupplied to the second absorption section in the absorption column,
wherein an extraction position of the first absorption liquid extraction line through which the CO₂ absorption liquid is extracted from the absorption column is a position having a peak liquid temperature in a reaction temperature distribution of the CO₂ absorption liquid inside the first absorption section and a peak liquid temperature in a reaction temperature distribution of the CO₂ absorption liquid inside the second absorption section.

2. The CO₂ recovery device according to claim 1,
wherein a cooler which cools the CO₂ absorption liquid extracted from the first absorption liquid extraction line is provided, and a temperature difference between a liquid temperature when the CO₂ absorption liquid is extracted and a liquid temperature when the CO₂ absorption liquid cooled by the cooler is resupplied is 10°C or more.

3. The CO₂ recovery device according to claim 1,
wherein a liquid temperature when the CO₂ absorption liquid is extracted at the extraction position is 45°C or more.

4. The CO₂ recovery device according to claim 2, further comprising:
a cooling column which cools the gas containing CO₂ and supplies the cooled gas to the absorption column,
wherein a liquid temperature when the CO₂ absorption liquid cooled by the cooler in the first absorption liquid extraction line is resupplied is equal to or less than a gas temperature of the gas supplied from the cooling column to the absorption column.

5. The CO₂ recovery device according to claim 1, further comprising:
a third absorption section which is disposed below the second absorption section in the height direction of the absorption column along with the first absorption section and the second absorption section and absorbs CO₂ from the gas; and
a second absorption liquid extraction line which is provided between the second absorption section and the third absorption section, and through which the CO₂ absorption liquid absorbing CO₂ contained in the gas in the second absorption section is extracted from the absorption column and the CO₂ absorption liquid is cooled and resupplied to the third absorption section in the absorption column.

6. A CO₂ recovery device having an absorption column which causes a gas containing CO₂ and a CO₂ absorption liquid to come into countercurrent contact with each other to absorb CO₂ from the gas, the device comprising:
a CO₂ absorption section which includes a first absorption section having a filling layer absorbing CO₂ from the gas and a second absorption section which is positioned below the first absorption section and has a filling layer absorbing CO₂ from the gas, the first absorption section and the second absorption section being disposed in the absorption column in a height direction of the absorption column; and
a first absorption liquid extraction line which is provided between the first absorption section and the second absorption section, and through which a CO₂ absorption liquid absorbing CO₂ contained in the gas in the first absorption section is extracted from the absorption column and the CO₂ absorption liquid is cooled by a cooler and resupplied to the second absorption section in the absorption column,
wherein in a case where the sum of heights of the filling layers in the CO₂ absorption section is set to 1, an extraction position of the first absorption liquid extraction line through which the CO₂ absorption liquid is extracted from the absorption column is an extraction height of 0.25 to 0.85 from a lower end of the filling layer of the second absorption section.

7. The CO₂ recovery device according to claim 6,
wherein the extraction position is an extraction height of 0.25 to 0.7 from the lower end of the filling layer of the second absorption section.

8. The CO₂ recovery device according to claim 6,
wherein the extraction position is an extraction height of 0.4 to 0.7 from the lower end of the filling layer of the second absorption section.

9. The CO₂ recovery device according to claim 6,
wherein the liquid temperature when the CO₂ absorption liquid is extracted at the extraction position is 45°C or more.

10. The CO₂ recovery device according to claim 6, further comprising:
a third absorption section which is disposed below the second absorption section in the height direction of the absorption column along with the first absorption section and the second absorption section and absorbs CO₂ from the gas; and
a second absorption liquid extraction line which is provided between the second absorption section and the third absorption section, and through which the CO₂ absorption liquid absorbing CO₂ contained in the gas in the second absorption section is extracted from the absorption column and the CO₂ absorption liquid is cooled and resupplied to the third absorption section in the absorption column, and
wherein in a case where the sum of heights of the filling layers in the CO₂ absorption section is set to 1, an extraction height of 0.25 to 0.85 from a lower end of the filling layer of the third absorption section is set.

11. A CO₂ recovery method having an absorption column which causes a gas containing CO₂ and a CO₂ absorption liquid to come into countercurrent contact with each other to absorb CO₂ from the gas, the method comprising:
a first absorption step of causing the gas and the CO₂ absorption liquid to come into countercurrent contact with each other in a filling layer of a first absorption section in the absorption column to absorb CO₂ from the gas;
an extraction/resupply step of extracting the CO₂ absorption liquid absorbing CO₂ contained in the gas in the first absorption section from the absorption column and cooling the CO₂ absorption liquid by a cooler to resupply into the absorption column; and
a second absorption step of causing the gas and the resupplied CO₂ absorption liquid to come into countercurrent contact with each other by a filling layer of a second absorption section which is disposed in the absorption column in a height direction of the absorption column and is positioned below the first absorption section to absorb CO₂ from the gas,
wherein in the extraction/resupply step, in a case where the sum of heights of the filling layers in the CO₂ absorption section is set to 1, an extraction position at which the CO₂ absorption liquid is extracted from the absorption column is an extraction height of 0.25 to 0.85 from a lower end of the filling layer of the second absorption section.
